Europäisches Patentamt

(19) European Patent Office

Office européen des brevets

(11) Publication number: **0 308 103 B1**

(12)

# EUROPEAN PATENT SPECIFICATION

(45) Date of publication of patent specification :
31.07.91 Bulletin 91/31

(51) Int. Cl.⁵ : **F17C 9/02, F25J 3/08**

(21) Application number : **88308066.5**

(22) Date of filing : **31.08.88**

(54) Method to deliver ultra high purity helium gas to a use point.

(30) Priority : **01.09.87 US 91888**

(43) Date of publication of application :
**22.03.89 Bulletin 89/12**

(45) Publication of the grant of the patent :
**31.07.91 Bulletin 91/31**

(84) Designated Contracting States :
**BE DE ES FR GB IT NL**

(56) References cited :
**GB-A- 1 147 215**
**US-A- 2 895 303**
**US-A- 3 792 591**
**US-A- 4 579 566**

(56) References cited :
**PROCEEDINGS OF THE SEVENTH INTER-
NATIONAL CRYOGENIC ENGINEERING CON-
FERENCE, 4th-7th July 1978, London, ICEC7,
pages 642-647, IPC Science and Technology
Press, Guildford, Surrey, GB; A.P.STOLL et al.:
"Helium purifiers"**

(73) Proprietor : **UNION CARBIDE CORPORATION**
**39 Old Ridgebury Road**
**Danbury Connecticut 06817 (US)**

(72) Inventor : **Graczyk, Lawrence Stephen**
**16 Scattertree Lane**
**Orchard Park New York, 14127 (US)**
Inventor : **Francis, Arthur Wellington**
**7 Peachtree Terrace**
**New City New York, 10956 (US)**

(74) Representative : **Gore, Peter Manson et al**
**W.P. THOMPSON & CO. Coopers Building**
**Church Street**
**Liverpool L1 3AB (GB)**

## Description

The present invention relates to the delivery of helium gas to a use point. More particularly it relates to an improvement wherein such helium gas is delivered at unexpectedly high purity.

When relatively large quantities of gases, such as, for example oxygen, nitrogen, argon or hydrogen, are required by a use point, the gases are generally delivered in liquid form to a storage tank near the use point. The liquefied gas is then vaporized and passed on as needed to the use point.

The gas must be delivered to the use point at a pressure specified by the use point requirements. However, for safety reasons, liquefied gases cannot usually be transported over public roads from a production plant to the liquid storage tank near the use point at pressures significantly above atmospheric. For most gases the use point pressure requirement is met by pumping the liquefied gas from the transport vehicle into the storage tank using a liquid pump to increase its pressure. The liquefied gas is stored in the storage tank at this high pressure and, upon demand from the use point, is vaporized at the high pressure and delivered to the use point as pressurized gas meeting the use point pressure requirements.

This pressurizing procedure may be used effectively with all liquefied gases except for helium. Because of its unusual physical properties, it is not practical to pump liquid helium to a significantly higher pressure. Because of the very low heat of vaporization of liquid helium, the heat introduced to the liquid by the action of the liquid pump causes a significant amount of the liquid to be vaporized and thus lost. Furthermore, because the density of cold helium gas is not much different from that of liquid helium, every time a storage tank is filled with liquid helium, a large amount of the cold helium gas within the tank is displaced and lost ; at higher pressures these displacement losses are even higher. Accordingly, heretofore, helium has been delivered to use points by cylinder or tube trailer as high pressure gas.

While this helium delivery system is satisfactory for most uses of helium, it presents a problem when the use point requires gaseous helium of ultra high purity. This is because the pumping activity required to achieve the requisite pressure invariably causes some impurity contamination of the gaseous helium. Heretofore the highest purity gaseous helium generally available has had an impurity concentration of about 30 to 50 parts per million (ppm). Ultra high purity helium gas is being increasingly required by, for example, the electronics industry.

US-A-4579566 describes a method for obtaining a substantially dust free gas from a dust-containing cryogenic liquid stored in a reservoir, wherein liquid from the reservoir is supplied to a compartment of an auxiliary vessel so that a constant-level bath is formed in the compartment ;

a quantity of the liquid is vapourised (thereby reducing the liquid level in the reservoir) ;

and gas is drawn off from an upper portion of the compartment.

US-A-2895303 describes an alternating two-step method for purifying a gas of low boiling point. In the first step the gas is introduced at room temperature into the upper portion of a sealed heat exchanger having non-contacting warm and cold sides and a temperature gradient ranging from substantially room temperature at the top of the heat exchanger to slightly below the gases boiling point at the bottom of the heat exchanger is maintained. The gas is forced downwardly through the heat exchanger on the warm side to freeze out impurities. Cold purified gas is withdrawn from the bottom of the heat exchanger and is introduced into the cold side of the bottom of the heat-exchanger to emerge from the top of the heat-exchanger.

The second step comprises shutting of the gas supply and warming up the heat-exchanger to vaporise the contaminents.

US-A-3792591 describes a method for removing condensable gaseous impurities from helium gas, in which the impurities are condensed by subjecting the impure helium to indirect gas exchange with cold pure helium. The cooling of the impure stream is periodic and warm pure helium is periodically used to remove condensed impurities.

It has now been found possible to provide a method to deliver efficiently ultra high purity helium gas to a use point at the use point pressure requirement.

According to the present invention there is provided a method to deliver helium gas to a use point which comprises :

(A) providing gaseous helium from a high pressure cylinder or tube into a storage container containing liquid helium ;

(B) passing the gaseous helium in heat exchange relation with the liquid helium to :

(i) vaporise liquid helium,

(ii) increase or maintain the helium pressure, and

(iii) condense and/or solidify impurities out of the gaseous helium ;

(C) withdrawing ultra high purity helium gas comprising resulting vaporized helium and cleaned gaseous helium from the storage container ; and

2

(D) providing ultra high purity helium gas to a use point without need for further pressurization, the helium gas containing less than 10 ppm impurities.

According to the present invention there is also provided a method to deliver helium gas to a use point which comprises :

(A) providing gaseous helium from a high pressure cylinder or tube into a storage container containing supercritical helium at a temperature less than 20 K ;

(B) passing the gaseous helium in heat exchange relation with the supercritical helium to :

(i) warm supercritical helium,

(ii) increase or maintain the helium pressure, and

(iii) condense and/or solidify impurities out of the gaseous helium ;

(C) withdrawing ultra high purity helium gas comprising resulting warmed helium and cleaned gaseous helium from the storage container ; and

(D) providing ultra high purity helium gas to a use point without need for further pressurization, the helium gas containing less than 10 ppm impurities.

As used herein the term "supercritical fluid" means a fluid at or above its critical temperature and pressure. The critical temperature of helium is 5.2 K and the critical pressure of helium is 229 kPa (33.2 pounds per square inch absolute (psia)).

As used herein, the term "direct heat exchange" means the bringing of two fluids into heat exchange relation with physical contact or intermixing of the fluids with each other.

As used herein, the term "indirect heat exchange" means the bringing of two fluids into heat exchange relation without any physical contact or intermixing of the fluids with each other.

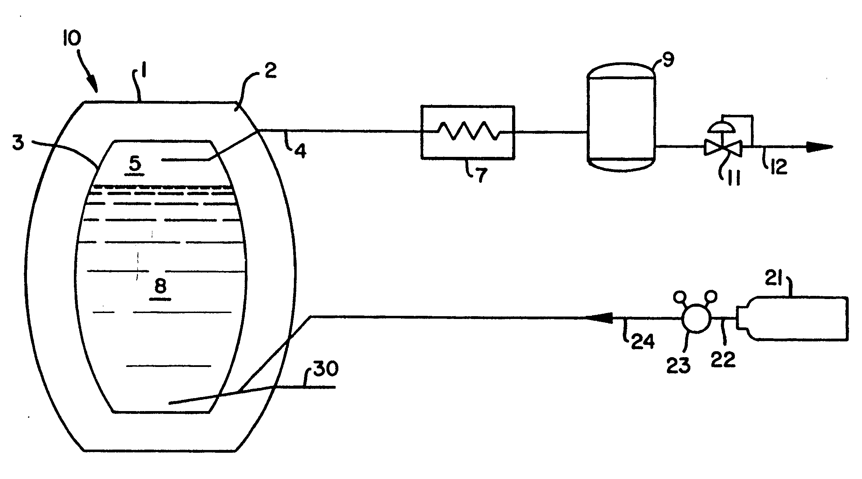

The present invention will now be further described with reference to and as illustrated in the accompanying drawing, but is in no manner limited thereto.

The sole Figure is a schematic diagram of one preferred arrangement useful for carrying out the method of this invention and illustrates one situation where the cold helium is liquid helium and the heat exchange is direct heat exchange.

Referring now to the Figure, storage container 10 is a double-walled vessel having outer wall 1 and inner wall 3 with the space between the walls filled with insulation 2 such as multi-shielded vacuum insulation. Container 10 contains a quantity of liquid helium 8 within the volume defined by inner wall 3.

Gaseous helium is provided into container 10 and into heat exchange relation with liquid helium 8. The gaseous helium could be from any suitable source. A convenient source of gas is a high pressure cylinder or tube, such as is shown in the Figure as tube 21, which contains gaseous helium at high pressure. Conveniently a number of such tubes could be manifolded together.

High pressure gaseous helium 22 from source 21 is passed through pressure reducing regulator 23 and its pressure reduced, preferably to about 138 to 172 kPa (20 to 25 pounds per square inch (psi)) greater than the use point pressure requirement. The resulting gaseous helium 24 is then passed into container 10 and in heat exchange relation with liquid helium 8. Conveniently gaseous helium 24 may be passed into container 10 through liquid fill pipe 30. Gaseous helium may be passed into the helium container continuously or intermittently.

The heat exchange between the gaseous helium and the liquid helium may be direct or indirect. For example, the gaseous helium could pass through one or more pipes or coils within the volume of liquid helium and thus serve to indirectly warm the liquid helium. Preferably the gaseous helium contacts the liquid helium, such as by being injected or sparged into and bubbled through the liquid helium, so as to directly warm the liquid helium. This direct heat exchange embodiment is illustrated in the Figure.

Referring back now to the Figure, gaseous helium 24 bubbles up through liquid helium 8 and in the process three things happen simultaneously. First, heat from the gaseous helium is transferred to the liquid helium causing some of the liquid helium to vaporize. Second, the pressure of the helium, i.e., the pressure within the container, is either increased or, if helium gas is being withdrawn, maintained, both because of the introduction of pressurized gaseous helium into the container and because of the vaporization of some of the liquid helium by the aforementioned direct heat transfer. Third, impurities within the gaseous helium are condensed and/or solidified out of the gaseous helium.

It is an advantage of this invention that, although the product is ultra high purity helium gas, the gaseous helium used for pressurization and vaporization need not be of such a purity level. Indeed the gaseous helium may have an impurity concentration up to about 100 times that of the ultra high purity helium gas product. Among the impurities which may be present in the gaseous helium one can name nitrogen, oxygen, argon, neon, carbon dioxide, water, hydrogen and hydrocarbons. The gaseous helium may be provided into the container at any convenient temperature although ambient temperature is the most convenient and is preferred. Because the condensation temperature of helium is lower than that of all of the impurities, the cooling of the gaseous helium

3

by the aforementioned direct or indirect heat transfer causes the impurities to condense and/or solidify out of the gaseous helium. As used here, the term "impurities" means both a single specie and more than one specie of impurity.

The freezing point of oxygen is 54.4 K, that of neon is 24.6 K and that of hydrogen is 14.0 K. Accordingly the gaseous helium should remain in heat exchange relation with the cold helium for a period of time sufficient to be cooled to a temperature of 54.4 K, preferably to a temperature of 24.6 K, most preferably to a temperature of 14.0 K. This requisite residence time will vary and will depend on factors known to those skilled in the art such as, for example, the size of the helium gas bubbles, if helium gas is passed into liquid helium, and the length and diameter of the heat exchange coil, if gaseous helium is piped through the cold helium. In any event, it is important to the practice of this invention that sufficient cold helium be maintained in the container to ensure that the gaseous helium is cooled to the point where impurities are condensed and/or solidified out of the helium. Requisite cold helium is maintained in the container when it is sufficient to cool the gaseous helium to a temperature of 54.4 K or less, preferably 24.6 K or less, most preferably 14.0 K or less.

Referring back to the Figure, helium gas 5 collects above the level of liquid helium 8. Helium gas 5 comprises vaporized helium which was originally liquid helium 8, and gaseous helium which was substantially cleaned of impurities as it bubbled up through the liquid helium. In the case where gaseous helium indirectly warms the cold helium, the heat exchange conduit could discharge the helium gas into the container at or near the top of the container or directly into a withdrawal line such as line 4.

It is important to note that the description of the invention with respect to liquid helium applies at system pressures less than the critical pressure of helium, namely 229 kPa (33.2 psia). For higher system pressures, the material within the storage vessel is a supercritical fluid and there is no distinction between the gas and liquid phases. In this case the heat exchange between the gaseous helium and the supercritical helium fluid serves to warm, but not vaporize, the supercritical helium fluid. In addition the introduction of the gaseous helium serves to expel material from the top of the vessel, and the cooling of the gaseous helium serves to remove impurities from the gaseous helium. Since the impurities will solidify, they will settle to the bottom of the storage vessel and will not flow out with the product helium gas.

When supercritical helium fluid is employed as the cold helium, it is important that the temperature of the supercritical helium fluid be less than 20 K. Otherwise sufficient heat exchange to achieve the desired product may not be carried out.

Typically, the cold helium employed at the initiation of the process of this invention is liquid helium. Thereafter, depending on system pressures, the pressure within the system may increase to the point where the cold helium becomes supercritical helium fluid. When the cold helium is liquid helium, the heat exchange with the gaseous helium serves to warm and vaporize liquid helium. When the cold helium is supercritical helium fluid, the heat exchange serves to warm the supercritical helium fluid. In both situations, however, the heat exchange serves to increase or maintain the helium pressure and to condense and/or solidify impurities out of the gaseous helium.

Referring back to the Figure, ultra high purity helium gas 5 is withdrawn from container 10 through line 4 generally at a point above the point where the gaseous helium was introduced into the container, and is provided to use point 12 without need for further pressurization. It is an important aspect of this invention that helium gas may be delivered to the use point not only at ultra high purity but also without need for further pressurization after vaporization. The ultra high purity helium of this invention has an impurity concentration of less than 10 ppm and may have an impurity concentration less than 5 or even 2 ppm.

The Figure illustrates three options which may be employed in the delivery of ultra high purity helium gas to the use point. The options may be used individually or in any combination. The ultra high purity helium gas may be warmed, such as by passage through atmospheric vaporizer 7, stored in storage tank 9, or have its pressure reduced by passage through pressure reducing valve 11.

Gaseous helium may be passed into container 10 at any suitable flowrate consistent with achieving good heat transfer within the container. Factors that will influence the quality of the heat transfer are the shape of the container, the amount of liquid within the container when the cold helium is liquid helium, and the required use point pressure. One way to improve the heat transfer is to increase the gaseous helium pathway through the cold helium such as by utilizing horizontal baffles within the container between the gaseous helium entry point and the helium gas withdrawal point.

When liquid helium is used as the cold helium and in order to maintain sufficient heat transfer opportunity and to ensure sufficient purification of the gaseous helium, the amount of liquid helium within the container should not fall below about one-tenth of the liquid capacity of the container. Liquid helium may be passed into the container through fill pipe 30 to replenish the supply.

It is an important aspect of this invention that the gaseous helium, whose primary purposes are to warm the cold helium and to increase or maintain pressure within the container and the system in general, also forms a part of the ultra high purity helium gas product. This serves to increase the overall efficiency of the delivery system.

It is a serendipitous occurrence that gaseous helium may be effectively employed to warm or vaporize cold helium and thus provide sufficient pressurization to the system to enable product delivery to a use point without need for further pressurization. The number of pounds of liquid vaporized by the heat removed from one pound of gas cooled from 21°C (70°F) to the normal boiling temperature of that gas for a number of gases is listed in Table I.

### TABLE I

| Gas | Grams | Pounds |
|---|---|---|
| Helium | 33928.7 | 74.8 |
| Hydrogen | 4150.4 | 9.15 |
| Neon | 1451.5 | 3.2 |
| Nitrogen | 512.6 | 1.13 |
| Oxygen | 399.2 | 0.88 |
| Argon | 303.9 | 0.67 |

It is thus seen that virtually all other gases could not be practically employed in the invention and that the advantageous results obtained by the invention through the use of certain particular physical properties of helium are unexpected based on the behavior of other cryogenic gases.

Heretofore, it has not been possible to deliver ultra high purity helium gas to a use point at pressure since the pressurization activity inevitably compromised the purity of the delivered product. Now by the use of the present invention one can effectively and efficiently provide helium gas to the use point without need for further pressurization after warming or vaporization while retaining the ultra high purity of the helium gas as it is delivered to a use point.

## Claims

1. A method to deliver helium gas to a use point which comprises :
(A) providing gaseous helium from a high pressure cylinder or tube into a storage container containing liquid helium ;
(B) passing the gaseous helium in heat exchange relation with the liquid helium to :
   (i) vaporise liquid helium,
   (ii) increase or maintain the helium pressure, and
   (iii) condense and/or solidify impurities out of the gaseous helium ;
(C) withdrawing ultra high purity helium gas comprising resulting vaporized helium and cleaned gaseous helium from the storage container ; and
(D) providing ultra high purity helium gas to a use point without need for further pressurization, the helium gas containing less than 10 ppm impurities.

2. A method according to claim 1, wherein the heat exchange is direct.

3. A method according to claim 2, wherein the pathway over which the gaseous helium passes in contact with liquid helium is elongated by at least one horizontally oriented baffle between the gaseous helium entry point and the helium gas withdrawal point.

4. A method according to any of claims 1 to 3, wherein the amount of liquid helium within the container is maintained at not less than one-tenth of the liquid capacity of the container.

5. A method to deliver helium gas to a use point which comprises :
(A) providing gaseous helium from a high pressure cylinder or tube into a storage container containing supercritical helium at a temperature less than 20 K ;
(B) passing the gaseous helium in heat exchange relation with the supercritical helium to :
   (i) warm supercritical helium,
   (ii) increase or maintain the helium pressure, and
   (iii) condense and/or solidify impurities out of the gaseous helium ;

5

(C) withdrawing ultra high purity helium gas comprising resulting warmed helium and cleaned gaseous helium from the storage container ; and

(D) providing ultra high purity helium gas to a use point without need for further pressurization, the helium gas containing less than 10 ppm impurities.

6. A method according to claim 5, wherein the heat exchange is direct.

7. A method according to claim 6, wherein the pathway over which the gaseous helium passes in contact with supercritical helium is elongated by at least one horizontally oriented baffle between the gaseous helium entry point and the helium gas withdrawal point.

8. A method according to claim 1 or 5, wherein the heat exchange relation is indirect.

9. A method according to any of claims 1 to 8, wherein the gaseous helium is cooled by the heat exchange to a temperature of 54.4 K or less.

10. A method according to claim 9, wherein the gaseous helium is cooled by the heat exchange to a temperature of 24.6 K or less.

11. A method according to claim 10, wherein the gaseous helium is cooled by the heat exchange to a temperature of 14.0 K or less.

12. A method according to any of claims 1 to 11, wherein the gaseous helium is provided into the storage container continuously.

13. A method according to any of claims 1 to 11, wherein the gaseous helium is provided into the storage container intermittently.

14. A method according to any of claims 1 to 13, wherein the gaseous helium is provided into the storage container at a pressure 138 to 172 kPa (20 to 25 pounds per square inch) higher than the pressure required by the use point.

15. A method according to any of claims 1 to 14, wherein the gaseous helium is provided into the storage container having an impurity concentration up to 100 times that of the ultra high purity helium gas.

16. A method according to any of claims 1 to 15, wherein the ultra high purity helium gas is warmed after withdrawal from the storage container and before provision to the use point.

17. A method according to any of claims 1 to 16, wherein the gaseous helium is provided into the storage container at a temperature of substantially ambient.

**Patentansprüche**

1. Verfahren zum Anliefern von Heliumgas an eine Benutzungsstelle, bei dem :

(A) gasförmiges Helium von einer Hochdruckflasche oder einem Hochdruckzylinder in einen flüssiges Helium enthaltenden Speicherbehälter eingebracht wird ;

(B) das gasförmige Helium in Wärmeaustausch mit dem flüssigen Helium gebracht wird, um :

(i) flüssiges Helium zu verdampfen,

(ii) den Heliumdruck zu steigern oder aufrechtzuerhalten, und

(iii) Verunreinigungen aus dem gasförmigen Helium auszukondensieren und/oder erstarren zu lassen;

(C) Heliumgas von ultrahoher Reinheit, das resultierendes verdampftes Helium und gereinigtes gasförmiges Helium umfaßt, aus dem Speicherbehälter abgezogen wird ; und

(D) Heliumgas von ultrahoher Reinheit einer Benutzungsstelle zugeführt wird, ohne daß weiteres Aufdrücken erforderlich ist, wobei das Heliumgas weniger als 10 ppm Verunreinigungen enthält.

2. Verfahren nach Anspruch 1, bei dem der Wärmeaustausch unmittelbar erfolgt.

3. Verfahren nach Anspruch 2, wobei die Strecke, über welche das gasförmige Helium mit flüssigem Helium in Kontakt gebracht wird, mittels mindestens einer waagrecht ausgerichteten Leitfläche zwischen der Eintrittsstelle des gasförmigen Heliums und der Heliumgas-Entnahmestelle verlängert wird.

4. Verfahren nach einem der Ansprüche 1 bis 3, bei dem die Menge des flüssigen Heliums innerhalb des Behälters auf nicht weniger als einem Zehntel des Flüssigkeitsfassungsvermögens des Behälters gehalten wird.

5. Verfahren zum Anliefern von Heliumgas an eine Benutzungsstelle, bei dem :

(A) gasförmiges Helium von einer Hochdruckflasche oder einem Hochdruckzylinder in einen Speicherbehälter eingebracht wird, der superkritisches Helium bei einer Temperatur von weniger als 20 K enthält ;

(B) das gasförmige Helium in Wärmeaustausch mit dem superkritischen Helium gebracht wird, um :

(i) superkritisches Helium aufzuwärmen,

(ii) den Heliumdruck zu steigern oder aufrechtzuerhalten, und

(iii) Verunreinigungen aus dem gasförmigen Helium auszukondensieren und/oder erstarren zu lassen;

(C) Heliumgas von ultrahoher Reinheit, das resultierendes aufgewärmtes Helium und gereinigtes gasförmiges Helium umfaßt, aus dem Speicherbehälter abgezogen wird ; und

(D) Heliumgas von ultrahoher Reinheit einer Benutzungsstelle zugeführt wird, ohne daß weiteres Aufdrücken erforderlich ist, wobei das Heliumgas weniger als 10 ppm Verunreinigungen enthält.

6. Verfahren nach Anspruch 5, bei dem der Wärmeaustausch direkt ist.

7. Verfahren nach Anspruch 6, wobei die Strecke, über welche das gasförmige Helium mit superkritischem Helium in Kontakt gebracht wird, mittels mindestens einer waagrecht ausgerichteten Leitfläche zwischen der Eintrittsstelle des gasförmigen Heliums und der Heliumgas-Entnahmestelle verlängert wird.

8. Verfahren nach Anspruch 1 oder 5, bei dem der Wärmeaustausch mittelbar ist.

9. Verfahren nach einem der Ansprüche 1 bis 8, bei dem das gasförmige Helium durch den Wärmeaustausch auf eine Temperatur von 54,4 K oder niedriger gekühlt wird.

10. Verfahren nach Anspruch 9, bei dem das gasförmige Helium durch den Wärmeaustausch auf eine Temperatur von 24,6 K oder niedriger gekühlt wird.

11. Verfahren nach Anspruch 10, bei dem das gasförmige Helium durch den Wärmeaustausch auf eine Temperatur von 14,0 K oder niedriger gekühlt wird.

12. Verfahren nach einem der Ansprüche 1 bis 11, bei dem das gasförmige Helium in den Speicherbehälter kontinuierlich eingebracht wird.

13. Verfahren nach einem der Ansprüche 1 bis 11, bei dem das gasförmige Helium in den Speicherbehälter intermittierend eingebracht wird.

14. Verfahren nach einem der Ansprüche 1 bis 13, bei dem das gasförmige Helium in den Speicherbehälter bei einem Druck eingebracht wird, der 138 bis 172 kPa (20 bis 25 pounds per square inch) höher als der an der Benutzungsstelle benötigte Druck ist.

15. Verfahren nach einem der Ansprüche 1 bis 14, bei dem das gasförmige Helium in den Speicherbehälter mit einer Verunreinigungskonzentration eingebracht wird, die bis zum 100-fachen derjenigen des Heliumgases von ultrahoher Reinheit beträgt.

16. Verfahren nach einem der Ansprüche 1 bis 15, bei dem das Heliumgas von ultrahoher Reinheit nach der Entnahme aus dem Speicherbehälter und vor dem Anliefern an die Benutzungsstelle aufgewärmt wird.

17. Verfahren nach einem der Ansprüche 1 bis 16, bei dem das gasförmige Helium in den Speicherbehälter mit einer Temperatur eingebracht wird, die im wesentlichen gleich der Außentemperatur ist.

## Revendications

1. Procédé pour délivrer de l'hélium gazeux à un point d'utilisation, qui consiste :

(A) à introduire de l'hélium gazeux, provenant d'une bouteille ou d'un tube sous haute pression, dans un récipient de stockage contenant de l'hélium liquide ;

(B) à soumettre l'hélium gazeux à un échange de chaleur avec l'hélium liquide pour :

(i) vaporiser l'hélium liquide,

(ii) accroître ou maintenir la pression de l'hélium, et

(iii) séparer les impuretés de l'hélium gazeux par leur condensation et/ou leur solidification ;

(C) à décharger de l'hélium gazeux ultra-pur consistant en l'hélium vaporisé résultant et en hélium gazeux épuré provenant du récipient de stockage ; et

(D) à fournir de l'hélium gazeux ultra-pur à un point d'utilisation sans la nécessité d'une pressurisation supplémentaire, l'hélium gazeux contenant moins de 10 ppm d'impuretés.

2. Procédé suivant la revendication 1, dans lequel l'échange de chaleur est direct.

3. Procédé suivant la revendication 2, dans lequel le trajet sur lequel l'hélium gazeux passe en contact avec l'hélium liquide est allongé par au moins une chicane orientée horizontalement, entre le point d'entrée de l'hélium gazeux et le point de déchargement de l'hélium gazeux.

4. Procédé suivant l'une quelconque des revendications 1 à 3, dans lequel la quantité d'hélium liquide à l'intérieur du récipient est maintenue à une valeur non inférieure au dixième de la capacité en liquide du récipient.

5. Procédé pour délivrer de l'hélium gazeux à un point d'utilisation, qui consiste :

(A) à introduire de l'hélium gazeux, provenant d'une bouteille ou d'un tube sous haute pression, dans un récipient de stockage contenant de l'hélium surcritique à une température inférieure à 20 K ;

(B) à soumettre l'hélium gazeux à un échange de chaleur avec l'hélium surcritique pour :

(i) échauffer l'hélium surcritique,

(ii) accroître ou maintenir la pression de l'hélium, et

(iii) séparer les impuretés de l'hélium gazeux par leur condensation et/ou leur solidification ;

(C) à décharger de l'hélium gazeux ultra-pur consistant en l'hélium échauffé résultant et en l'hélium gazeux épuré provenant du récipient de stockage ; et

(D) à fournir de l'hélium gazeux ultra-pur à un point d'utilisation sans la nécessité d'une pressurisation supplémentaire, l'hélium gazeux contenant moins de 10 ppm d'impuretés.

6. Procédé suivant la revendication 5, dans lequel l'échange de chaleur est direct.

7. Procédé suivant la revendication 6, dans lequel le trajet sur lequel l'hélium gazeux passe en contact avec l'hélium surcritique est allongé par au moins une chicane orientée horizontalement, entre le point d'entrée de l'hélium gazeux et le point de déchargement de l'hélium gazeux.

8. Procédé suivant la revendication 1 ou 5, dans lequel l'échange de chaleur est indirect.

9. Procédé suivant l'une quelconque des revendications 1 à 8, dans lequel l'hélium gazeux est refroidi par l'échange de chaleur à une température égale ou inférieure à 54,4 K.

10. Procédé suivant la revendication 9, dans lequel l'hélium gazeux est refroidi par l'échange de chaleur à une température égale ou inférieure à 24,6 K.

11. Procédé suivant la revendication 10, dans lequel l'hélium gazeux est refroidi par l'échange de chaleur à une température égale ou inférieure à 14,0 K.

12. Procédé suivant l'une quelconque des revendications 1 à 11, dans lequel l'hélium gazeux est introduit en continu dans le récipient de stockage.

13. Procédé suivant l'une quelconque des revendications 1 à 11, dans lequel l'hélium gazeux est introduit de manière intermittente dans le récipient de stockage.

14. Procédé suivant l'une quelconque des revendications 1 à 13, dans lequel l'hélium gazeux est introduit dans le récipient de stockage sous une pression supérieure de 138 à 172 kPa (20 à 25 lb/in²) à la pression requise au point d'utilisation.

15. Procédé suivant l'une quelconque des revendications 1 à 14, dans lequel est introduit dans le récipient de stockage de l'hélium gazeux ayant une concentration en impuretés allant jusqu'à 100 fois celle de l'hélium gazeux ultra-pur.

16. Procédé suivant l'une quelconque des revendications 1 à 15, dans lequel l'hélium gazeux ultra-pur est échauffé après avoir été déchargé du récipient de stockage et avant d'être amené au point d'utilisation.

17. Procédé suivant l'une quelconque des revendications 1 à 16, dans lequel l'hélium gazeux est introduit dans le récipient de stockage à une température pratiquement égale à la température ambiante.